(19) Europäisches Patentamt
European Patent Office
Office européen des brevets

(11) **EP 2 962 751 B1**

(12) **EUROPEAN PATENT SPECIFICATION**

(45) Date of publication and mention
of the grant of the patent:
**05.04.2017 Bulletin 2017/14**

(51) Int Cl.:
*B01J 2/02* (2006.01)     *B01J 2/04* (2006.01)
*B01J 2/06* (2006.01)     *B01F 13/00* (2006.01)
*B01J 2/08* (2006.01)

(21) Application number: **14175596.7**

(22) Date of filing: **03.07.2014**

(54) **METHOD OF FORMING DROPLETS IN A MULTIPLE-PHASE SYSTEM**

VERFAHREN ZUR FORMUNG VON TROPFEN IN EINEM MEHRPHASIGEN SYSTEM

PROCÉDÉ DE FORMATION DE GOUTTELETTES DANS UN SYSTÈME À PHASES MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.01.2016 Bulletin 2016/01**

(73) Proprietor: **Helmholtz-Zentrum Geesthacht
Zentrum für Material- und Küstenforschung
GmbH
21502 Geesthacht (DE)**

(72) Inventors:
• **FRIEß, Fabian
10827 Berlin (DE)**

• **SEIFFERT, Sebastian
14169 Berlin (DE)**
• **LENDLEIN, Andreas
14167 Berlin (DE)**
• **WISCHKE, Christian
14513 Teltow (DE)**

(74) Representative: **Gulde & Partner
Patent- und Rechtsanwaltskanzlei mbB
Wallstraße 58/59
10179 Berlin (DE)**

(56) References cited:
**WO-A1-03/025547**     **WO-A1-2010/128858
WO-A2-2014/057424**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

INTRODUCTION

Droplets of a defined composition, size and size distribution as well as microparticles produced therefrom are used in a number of different applications like e.g. cosmetic or pharmaceutical applications. In particular, such droplets may represent precursors for use in the manufacture of microparticles, microgels or composite materials.

In order to provide suitable droplets for microparticles production, it is necessary to control their size and shape in addition to controlling their chemical function. This challenge can be addressed by droplet formation in a two-phase system by use of the flow focusing technique. Droplet-based emulsification of liquid phases by use of the flow focusing technique is well known in the art and has been described e.g. in WO 97/43048 A1, WO 99/30833 A1 and L. Martin-Banderas, M. Flores-Mosquera, P. Riesco-Chueca, A. Rodriguez-Gil, A. Cebolla, S. Chávez, A. M. Gañán-Calvo, Small 2005, 1, 688 - 692.

This technique comprises droplet formation in a two-phase system and involves dispersion of an inner fluid (also called phase to be dispersed) in a surfactant-doped outer phase (also called continuous phase), which is preferably performed in the dripping regime to form homogeneous droplet sizes. Subsequent and/or simultaneous emulsification with one or several additional phases allows the preparation of e.g. double-, triple-, quadruple-, or quintuple- emulsions. In brief, in the two-phase system, a stream of an inner fluid, e.g. an aqueous phase, may be created in a microchannel and may then periodically be broken to form individual droplets by flow focusing with an immiscible outer fluid phase comprising a surfactant (continuous phase), e.g. an oil phase. The size of the resulting droplets is controlled by the flow rates of the inner and outer fluid phases, the dimension of the microchannels, and the fluid interfacial tension. Since all these parameters are constant and controllable, the droplet size can be monodisperse and can be determined by adequate choice of the experimental parameters.

Despite its great promise, an intrinsic limitation in the use of droplet-based emulsification of liquid phases by use of flow focusing is imposed by the necessity to operate at low flow rates. This is due to the dripping-to-jetting transition in droplet-based microfluidics recently described e.g. by A. S. Utada, A. Fernandey-Nieves, H. A. Stone, D. A. Weitz, Phys. Rev. Lett. 2007, 99, 094502. When both the inner dispersed and the outer continuous phase are injected into a microfluidic device at low rates, individual monodisperse drops of the inner fluid within the outer fluid are formed periodically in a process termed dripping. By contrast, if the flow rate of either of these fluids is increased beyond a certain limit, this results in a jet of the inner fluid with droplets forming far further downstream. Typically, these droplets have a broader size distribution than droplets formed from dripping. The onset of the dripping-to-jetting transition is assessed by the capillary number of the outer fluid (continuous phase) and the Weber number of the inner fluid (phase to be dispersed):

$$Ca = \frac{\eta \cdot v}{\sigma} \qquad (1)$$

$$We = \frac{\rho \cdot v^2 \cdot d}{\sigma} \qquad (2)$$

In these equations, $\eta$ is the viscosity, $v$ the flow speed, and $p$ the density of the respective fluid, along with d the channel diameter and $\sigma$ the interfacial tension between the two immiscible phases in the microfluidic device. The capillary number of the outer fluid reflects the balance between the drag of the outer fluid pulling on the inner fluid and interfacial tension that resists the flow in the jet as droplet pinch-off occurs. The Weber number of the inner fluid reflects the balance between inertial forces of the inner liquid pushing the drop downstream and, again, interfacial tension resisting the flow. The boundary between dripping and jetting occurs when either number, or their sum, is approximately equal to unity.

Due to this intrinsic circumstance, controlled fabrication of droplets must occur at low flow rates to keep both of the above numbers small. This necessity poses an intrinsic limitation to the productivity of droplets and microparticles produced therefrom by droplet-based emulsification of liquid phases by flow focusing, impairing its utility in industrial-scale processes.

Thus, it is desirable to increase the productivity of droplet production by flow focusing.

DESCRIPTION OF THE INVENTION

The present invention provides a method of forming droplets in a multiple-phase system, wherein:

- a phase to be dispersed is forced through an orifice into a flow of a first continuous phase so that the phase to be dispersed forms droplets in the first continuous phase, wherein the phase to be dispersed is immiscible in the first continuous phase and wherein during droplet formation the first continuous phase lacks any surfactant; and wherein

- subsequent to droplet formation, surfactant is added to the flow of the first continuous phase comprising the droplets of the phase to be dispersed.

The method of the invention can be used in a two-phase system to produce a single emulsion. The method of the invention also encompasses the use of a system with more than two phases in order to provide multi-emulsions like e.g. double, triple, quadruple, quintuple emulsion etc. However, multi-emulsions can also be achieved starting from the two-phase system and by performing one or several additional subsequent emulsification steps leading to the production of multi-emulsions like e.g. double, triple, quadruple, quintuple emulsion etc.

In the method of the invention, droplet formation can be achieved by different methods which are based primarily on hydrodynamic forces. Preferably, droplet formation occurs by continuous flow procedures like e.g. flow focusing procedures and axisymmetric flow focusing procedures (see e.g. WO 97/43048 A1, WO 99/30833 A1 and L. Martin-Banderas et al, Small 2005, 1, 688-692; T. Fu et al, Chem. Engin. Science 2012, 84, 207 - 217; S. Takeuchi et al, Adv. Mater. 2005, 17, 1067 - 1072). Droplet formation in flow focusing procedures may be achieved with or without cross-sectional tapering or diminution.

Wherein in the method of the prior art, the continuous phase already comprises a surfactant prior to droplet formation so that droplet formation and stabilization occurs simultaneously, in the method of the present invention the phase to be dispersed forms droplets into a first continuation phase which lacks any surfactants for stabilization of said droplets. Thus, in the method of the present invention the formation of droplets is temporally and spatially separated from stabilization of the droplets formed. The effect achieved by this difference is that in the method of the present invention during actual formation of the droplets the interfacial tension $\sigma$ between the phase to be dispersed and the first continuous phase is increased compared to the method of the prior art. This is because during droplet formation the first continuous phase lacks any surfactant which usually lowers the interfacial tension $\sigma$. However, as is evident from equations (1) and (2), a higher interfacial tension $\sigma$ leads to a decrease in capillary and Weber number of the phase to be dispersed and the first continuous phase. Since the boundary between dripping and jetting is usually reached when either number or their sum is approximately equal to unity (see A. S. Utada, A. Fernandey-Nieves, H. A. Stone, D. A. Weitz, Phys. Rev. Lett. 2007, 99, 094502), an increase in interfacial tension $\sigma$ allows for higher flow rates (see equations (1) and (2)). As a consequence, the method of the invention allows for a higher overall flow speed before the transition from dripping to jetting occurs.

Thus, with the method of the present invention droplet formation is temporally and spatially separated from droplet stabilization, allowing droplet formation to occur at significantly increased flow rate while ensuring subsequent droplet stabilization in order to efficiently inhibit or avoid coalescence of the droplets formed. In this way, the quantity and throughput of droplet production can be increased.

Surfactants may have the effect to inhibit or abolish reactions intended to take place at the surface of the droplets. By postponing the addition of surfactant to a later point, certain modifications of the surface of the droplets become available for the first time. By allowing the droplets to fuse with other droplets, it is possible to load the droplets with functional agents or any other components or materials after droplet formation has occurred. Further, conduct of chemical processes and reactions is made possible without interference by the presence of surfactants; such processes and reactions can be e.g. directed cross-linking of compounds present in the droplets formed, surface modification by covalent binding of compounds or by physical linkage. Also layer-wise formation of surfaces is enabled in a surfactant free environment. Further, physical processes which may be inhibited in the presence of surfactants are made possible, like e.g. precipitation, solidification, coagulation, vitrification, crystallization or phase transition processes at the inner or outer surface of the droplets.

The presence of surfactant during droplet formation can lead to unwanted diffusion of surfactant into the droplet formed. By postponing the addition of surfactant to a later point in time, the method of the invention allows to create a desired diffusion barrier function of the droplet before surfactant is added.

The term "drop" or "droplet" as used herein primarily refers to a small quantity of liquid, bounded completely or almost completely by free surfaces to its environment, whereas the environment can be e.g. another fluid like atmosphere, another gas or another liquid. However for the purpose of the present invention, the term "drop" or "droplet" also encompasses bubbles, i.e. small quantities of gas bounded completely or almost completely by free surfaces to its environment, whereas the environment can be another fluid like a liquid. If the phase to be dispersed is formed of a gaseous fluid and the first continuous phase is formed of a liquid, the method of the invention leads to the formation of droplets, wherein said droplets in fact are bubbles.

The method of the invention is directed to the production of droplets using droplet-based emulsification of liquid phases by flow focusing. Thus, the method comprises the formation of an emulsion of a first liquid phase and a second liquid phase wherein one of the liquid phases is forming droplets in the other liquid phase. This droplet-based emulsification is achieved by flow focusing a liquid phase to be dispersed into a liquid continuous phase. The basic principle and steps of flow focusing are well known in the art and are exemplary described in WO 97/43048 A1, WO 99/30833 A1 and L. Martin-Banderas, M. Flores-Mosquera, P. Riesco-Chueca, A. Rodriguez-Gil, Á. Cebolla, S. Chávez, A. M. Gañán-Calvo, Small 2005, 1, 688 - 692.

In the method of the invention the phase to be dispersed is emulsified in a first continuous phase to form droplets. The phase to be dispersed preferably represents a liquid phase. Alternatively, the phase to be dispersed represents a gas phase leading to formation of droplets in form of bubbles. Thus, the composition of the phase to be dispersed determines the initial composition of the droplets formed. In case the phase to be dispersed is a liquid phase, it may be a homogenous liquid phase or may itself be an emulsion or dispersion. The phase to be dispersed may comprise or consist of a composition of different compounds, wherein said compounds may comprise a solvent or melt, one or several types of lipids, phospholipids, polymers, oligomers or monomers, precursors of a polymer or polymer network, an active substance or a salt thereof or the like or any combinations thereof. The exact composition of the phase to be dispersed will depend on the purpose for which the droplets formed will be used.

The increase in interfacial tension $\sigma$ between the phase to be dispersed and the first continuous phase can be further intensified if it is ensured that during droplet formation the phase to be dispersed also lacks any surfactant.

The first continuous phase is a liquid phase, within which the phase to be dispersed is immiscible and capable of forming droplets. The exact nature and composition of the first continuous phase will depend on the actual nature and composition of the phase to be dispersed and on the purpose for which the droplets to be formed or the mixture of the first continuous phase and the droplets formed will be used. The first continuous phase lacks any surfactant during droplet formation.

Surfactants are surface active agents which lower the interfacial tension between two liquid phases. Surfactants are usually organic compounds which are amphiphilic. In other words surfactants contain both hydrophobic (or lipophilic) groups and hydrophilic groups. Thus, a surfactant comprises a water soluble component and an oil soluble component. Usually the structure of a surfactant comprises a hydrophilic head and one or more hydrophobic tails. Surfactants in the sense of this invention can also be sterical stabilizers such as molecules or macromolecules of different architectures and compositions, colloidal particles and all other components which show suitable capacity to stabilize droplet interfaces. For example, the surfactant will diffuse in water and absorb at the interface between oil and water phase or between the phase to be dispersed and the first continuous phase. The skilled person is well aware of a vast number of different surfactants which can be used in the method of the invention. The nature and composition of a surfactant to be used in a method of the invention will depend on the nature and composition of the phase to be dispersed and of the first continuous phase.

The phase to be dispersed may be formed as aqueous phase and the first continuous phase may represent an oil phase or vice versa.

In order to allow for proper emulsification, it is important that the two phases are immiscible within each other. As used herein, the term "immiscible" does not only refer to absolute immiscibility of the two components in a strict sense but encompasses also miscibility of two phases which can form an emulsion with one another. Preferably, the term "immiscible" encompasses phases, which are hardly miscible within each other. In particular, the term "immiscible" encompasses a solubility of the phase to be dispersed in the first continuous phase of 4 mol/l or less, preferably of 1 mol/l or less, more preferably of 0.1 mol/l or less, even more preferably of 0.01 mol/l or less.

In the method of the invention, a phase to be dispersed is forced through an orifice or opening into a flow of a first continuous phase so that the phase to be dispersed forms droplets in the first continuous phase. In a continuous flow method, droplets are produced by hydrodynamic means, i.e. no other driving forces are necessary than forces exerted by directed flow streams of the phase to be dispersed and of the first continuous phase. Droplets of the phase to be dispersed in the first continuous phase are formed by forcing the phase to be dispersed through an orifice into a continuous flow of the first continuous phase. The orifice may be a simple opening through which the phase to be dispersed is fed into the flow of the first continuous phase. Also several orifices in parallel run devices or several orifices in the same device using e.g. a membrane for emulsification may be employed. The orifice may be formed by an opening of a channel wherein the phase to be dispersed is forced to flow continuously in a given direction. In one out of several possible geometries, the orifice is placed at a cross-junction with a cross-junction channel wherein the first continuous phase is forced to flow in a direction approximately perpendicular to the flow direction of the phase to be dispersed. The (lateral) pressure force exerted by the flow stream of the first continuous phase on the flow stream of the phase to be dispersed leads to the formation of droplets in flow direction of the phase to be dispersed, downstream of the cross-junction with the cross-junction channel of the first continuous phase.

As is known in the art for continuous flow approaches like e.g. flow focusing, the size of the resulting droplets can be controlled by controlling the flow rates of the phase to be dispersed and of the first continuous phase as well as by appropriate definition of the dimensions of the channels used for guidance of the flow streams during droplet formation.

Subsequent to droplet formation, surfactant is added to the flow stream of the first continuous phase comprising the droplets formed of the phase to be dispersed. Surfactant is added downstream of droplet formation. Surfactant may be added as pure substance or in any type of composition or mixture. The surfactant may be added in form of a second continuous phase, wherein the composition of the second continuous phase, apart from the presence of surfactant, may be identical or different from the composition of the first continuous phase. If the first continuous phase is an oil phase, it is preferable that the second continuous phase is also an oil phase. If the first continuous phase is present as aqueous phase, it is preferable that the second continuous phase is also present as aqueous phase. The two continuous phases may be composed of different or similar liquids that are or are not fully miscible but allow the surfactant, either directly or by any additional manipulation such as addition of external forces, fields, light, heat, chemicals, components, liquids or the like, to be transported to the interface of the dispersed droplets with the first continuous phase. The surfactant may be added by feeding the flow stream of the first continuous phase comprising the droplets of the phase to be dispersed with a second continuous phase comprising the surfactant. Preferably, the second continuous phase is fed into the flow stream as a constant flow with a pre-determined flow rate. The surfactant may be added into the flow stream downstream of droplet formation by way of a flow stream provided by a second cross-junction channel. Said second cross-junction channel is located downstream of the first cross-junction channel and preferably allows to feed the second continuous phase in the flow stream of the first continuous phase comprising the droplets of the phase to be dispersed such that blending in of the surfactant is efficient while droplets are not forced to collapse. The second continuous phase may be fed in in a flow direction approximately perpendicular to the flow direction of the flow stream of the first continuous phase comprising the droplets of the phase to be dispersed.

The surfactant can be added at any point downstream of initial droplet formation. If quick stabilization is intended, it is preferable to add surfactant directly after formation of the droplets. On the other hand, the method of the invention provides for the first time the opportunity to modify or manipulate the droplets formed before the droplets are stabilized by addition of surfactants. This opens up the opportunity to perform additional steps downstream of droplet formation and upstream of addition of surfactant. Such modification or manipulation may comprise loading the droplets with desired compounds or active ingredients, fusing or dividing the droplets to a predetermined size, further emulsify the droplets in order to arrive at multi-layered droplets or multi-core droplets, coat and/or surface modify the droplets in order to seal the droplets, influence their permeability and/or reactivity of the surface, cross-link the components like monomers, oligomers, polymers or network precursors in the individual droplets or of droplets with each other or with other components or the like. Modification also includes physical processes such as, but not limited to, phase transitions, e.g. glass transitions, crystallization, or melting of components of the droplets which according to the invention can be performed without surfactants interfering such as by partial penetration into the interface or core of the droplet.

During droplet formation, the first continuous phase and/or the phase to be dispersed can comprise compounds capable of increasing the interfacial tension between the first continuous phase and the phase to be dispersed. The first continuous phase can also comprise components aiming to control or prevent a partial miscibility of the disperse phase and first continuous phase or the first continuous phase and second continuous phase, which may be but are not limited to salts or solvents. Preferably, such compounds are present in the first continuous phase and not in the phase to be dispersed. In such a setting, the droplets formed will not contain considerable amounts of said compounds. Preferably, such compounds may not interfere with the stabilization process upon addition of the second continuous phase comprising surfactants, or may be completely or partially removed by intermediate exchange of parts of the first continuous phase, e.g. by flow-splitting side-channels, permeable membrane tubes or any other known methodology. The effect achieved by use of such compounds is that, again, the interfacial tension $\sigma$ between the first continuous phase and the phase to be dispersed is increased. Further increase in interfacial tension $\sigma$ can be beneficial to allow manipulation of droplets or to allow for even higher flow rates without leaving the dripping regime and entering the jetting regime.

First continuous phase, second continuous phase and/or the phase to be dispersed are preferably provided as constant flow stream, more preferably as laminar flow.

Preferably, the method of the invention is conducted to allow droplet formation in a dripping-regime. Droplet formation in a dripping-regime has the advantage that droplet size can be controlled very efficiently and droplets with a very narrow size distribution will be achieved.

However, the method of the invention may also be conducted to allow droplet formation in a jetting-regime. Droplet formation in a jetting-regime has the advantage that droplet formation can be conducted at even higher flow rates than in the dripping regime. The high interfacial tension between the first continuous phase and the phase to be dispersed allows a controlled break-up of the jet into droplets at higher rates and/or of smaller sizes that can be achieved by methods of prior art.

The method of the invention can be performed in a microfluidic system. Microfluidic systems from various materials such as glass, polymers, metal or any other suitable material may be used. The microfluidic systems may have various geometries of arrangements of flow pathways and may for instance include glass capillary based microfluidic or channel-based microfluidic systems. Exemplary embodiments of suitable microfluidic systems are disclosed in WO 97/43048 A1, WO 99/30833 A1 and L. Martin-Banderas et al, Small 2005, 1, 688-692; T. Fu et al, Chem. Engin. Science 2012, 84, 207 - 217; S. Takeuchi et al, Adv. Mater. 2005, 17, 1067 - 1072.

One example of a possible microfluidic system is a system of channels and cross-junctions wherein the dimensions of the channels and openings of the cross-junctions at the site where droplet formation occurs are small and usually do not exceed a diameter of 5 mm. Preferably, the dimensions of the channels and openings of the cross-junctions at the site where droplet formation occurs do not exceed a diameter of 1 mm, more preferably exhibit a diameter in the range of 1 mm to 1 nm, even more preferably exhibit a diameter in the range of 1 mm to 0.5 $\mu$m. Such a microfluidic system can comprise or consist of a first channel, which is designed to provide, guide and eventually focus a flow stream of the phase to be dispersed. This channel provides an orifice or opening at a cross-junction with a first cross-junction channel. The first cross-junction channel is designed and adapted to provide, guide and introduce a flow stream of the first continuous phase such that the flow stream of the first continuous phase exerts a force on the flow stream of the phase to be dispersed in order to allow droplet formation of the phase to be dispersed in the first continuous phase to occur by flow focusing. The microfluidic system further comprises a second cross-junction channel for introducing the surfactant into the flow stream of the first continuous phase comprising the droplets of the phase to be dispersed. The second cross-junction channel is located downstream of the first cross-junction channel in a flow direction of the phase to be dispersed such that the surfactant is introduced after formation of the droplets already occurred. The microfluidic system may be formed with channels exhibiting predetermined dimensions or with channels wherein the dimensions of one, some or all channels are adjustable at the site where droplet formation is intended to occur.

Preferably, such a microfluidic system comprises or consists of:

- a channel or capillary with an orifice or opening for focusing the flow of the phase to be dispersed into the flow of the first continuous phase;

- a first cross-junction channel or inflow position for introducing the flow of the first continuous phase, the first cross-junction channel or inflow position being in fluid contact with the outlet of the orifice or opening; and

- a second cross-junction channel or inflow position for introducing the surfactant, the second cross-junction channel or inflow position being located downstream of the first cross-junction channel;

wherein the term "inflow position" refers to coaxial arrangements of the particular channels, capillaries and cross-junction channels. Thus, the microfluidic system described above encloses microfluidic systems wherein one channel or capillary is placed partially or wholly within the lumen of another channel or capillary.

The method of the invention can be used for the production of droplets, nanoparticles and/or microparticles, in particular of monodisperse droplets, nanoparticles and/or microparticles. The term "microparticle" is used in its general, art-recognized meaning independent of the chemical composition and physical properties of the particle and encompasses solid particles, soft particles, and hydrogels. In particular, microparticles exhibit an average diameter of not more than 1 mm, preferably exhibit an average diameter in the range of 500 $\mu$m to 0.1 $\mu$m, even more preferably in the range of 100 $\mu$m to 0.5 $\mu$m. The term "nanoparticle" is used in its general, art-recognized meaning. In particular, nanoparticles are smaller than microparticles.

The method of the invention can be used for the production of multi-layered and/or multi-core microparticles by allowing multiple subsequent emulsification steps with one or several of these steps comprising disperse, first continuous and second continuous phase according to the teaching of this invention.

The method of the present invention is based on the finding that by increasing the interfacial tension $\sigma$ between the phase to be dispersed and the first continuous phase, it is possible to decrease the capillary and Weber number of the phase to be dispersed and the first continuous phase. This is achieved by allowing droplet formation to occur with a first continuous phase lacking any surfactant and to postpone stabilization of the droplets formed further downstream in the process subsequent to the flow focusing step. Thus, the process can be conducted with significantly higher flow rates without surmounting the transition point from dripping-regime to jetting-regime. Therefore, the method of the invention allows the production of droplets of a predetermined composition with a defined size, narrow size distribution and higher flow rates compared to flow focusing methods of the prior art. The droplets produced may be used as templates or precursors for the production of microparticles, nanoparticles and/or materials comprising such droplets, microparticles and/or nanoparticles.

The method of the invention allows the production of droplets, microparticles and/or nanoparticles which are loaded with cosmetically, pharmaceutically or medically relevant active ingredients, sensors, probes, imaging substances, molecular switches or receptor substances for external stimulation, compounds, molecules, droplets and/or particles, which may be present in solution or dispersed. Such droplets, microparticles and/or nanoparticles may be used for cosmetic, diagnostic, therapeutic or other technical purposes. The composition of the phase to be dispersed will, thus, depend on the purpose of the final product to be produced. Loading of the droplets can occur prior to droplet formation e.g. by selecting the desired composition of the phase to be dispersed or after droplet formation. The method of the present invention allows for the first time loading of the droplets after droplet formation but in the absence of surfactant. This may allow the production of surfactant free droplets as well as the production of droplets, wherein loading of the droplets in the presence of surfactant is difficult.

Solvents, compounds and materials to be used in the method of the invention are limited based on their compatibility with the droplet-based emulsification process. Basically it is possible to disperse an oil (or organic) phase in an aqueous phase or vice versa. Under selected conditions, also immiscible aqueous phases can be dispersed in each other or immiscible oil phases can be dispersed in each other. In order to produce solid or dry microparticles or nanoparticles, it is possible to completely or partially remove the solvents after production of the droplets or to use extraction media, extraction means and/or precipitating agents as well as spray drying with a continuous gas phase. This solidification process may be in the flow channel or capillary, or subsequently outside the microfluidic system.

The phase to be dispersed may comprise active ingredients, precursors, lipids, polymers or the like which are intended to have an influence on the functionality of the resulting droplets. In case the phase to be dispersed is formed as aqueous phase, the phase to be dispersed may comprise precursors, like e.g. NIPAAm and/or other educts which may be polymerized or cross-linked in a radicalic reaction, ionic reaction, addition reaction, click chemistry reaction, enzymatic reaction or in any other way; or lipids or polymers, like e.g. PNIPAAm, sugar, polysaccharides, polyether, polyester, polyanhydrides, polyorthoesters, polyglyceroles, polyanions, polycations, amphiphilic polymers or the like. In such a case the first or second continuous phase may comprise precursors, like e.g. isocyanate, cyanoacrylate, cross-linking agents, and/or other educts which may be polymerized or cross-linked in a radicalic reaction, ionic reaction, addition reaction, click chemistry reaction, enzymatic reaction or in any other way; or polymers, like e.g. polyester, polyether, polyamide, polyurethane and/or amphiphilic polymers. A variety of surfactants may be used which include, but are not limited to, Krytox FSL 157, Abil EM 90, or sodium dodecyl sulfate.

The droplets formed initially from the phase to be dispersed may exhibit diffusion barriers which are not favorable for the intended application. In order to provide droplets with a desired diffusion barrier function it is possible to prepare multi-layered droplets or particles e.g. by using additional channels and/or steps in the method of the invention. Said additional channels or steps may be introduced at any desired point in the method of the invention, namely before or during formation of the droplets, between formation of the droplets and addition of the surfactant, during addition of the surfactant and/or after surfactant has been added. Such additional channels or steps may facilitate or encompass the addition of one or more additional substances. Said additional substances may be introduced with the first continuous phase, the second continuous phase or by a separate phase or composition. Droplets or microparticles with a desired diffusion barrier function may be provided by formation of a polymer or lipid, solid-lipid, or waxy film on the surface of the droplets or microparticles. Suitable polymers or copolymers can be polyesters (e.g. PCL, PLGA) polyanhydrides, polyorthoesters, polycyanoacrylate, polyglycerole, polyanions and/or polycations and all other polymers relevant for providing a particle coating or shell acting as diffusion barrier. Alternatively, such a further polymer layer can be produced by a subsequent reaction, e.g. such a further polymer layer can be formed from cyanoacrylate by polymerization to polycyanoacrylate. Such an additional layer may also be formed of an anorganic layer e.g. formed of silicate. Such an additional layer may be formed by multiple emulsion, precipitation, disposition or subsequent reactions which are preferably initiated at the phase interface. Such additional layers may also be used in order to produce droplets or particles with a controlled release function of certain ingredients.

Surfactants may have the effect to inhibit or abolish reactions intended to take place at the surface of the droplets or bubbles. By postponing the addition of surfactant to a later point, certain modifications of the surface of the droplets or bubbles become available for the first time. By allowing the droplets to fuse with other droplets, it is possible to load the droplets with functional agents or any other components or materials after droplet formation has occurred. Further, conduct of chemical processes and reactions is made possible without interference by the presence of surfactants; such processes and reactions can be e.g. directed cross-linking of compounds present in the droplets formed, surface modification by covalent binding of compounds or by physical linkage. Also layer-wise formation of surfaces is enabled in a surfactant free environment. Further, physical processes which may be inhibited in the presence of surfactants are made possible, like e.g. precipitation, solidification, coagulation, vitrification, crystallization or phase transition processes at the inner or outer surface of the droplets.

The presence of surfactant during droplet formation can lead to unwanted diffusion of surfactant into the droplet formed. By postponing the addition of surfactant to a later point in time, the method of the invention allows to create a desired diffusion barrier function of the droplet before surfactant is added.

The method of the invention and/or direct products thereof can be used to prepare single emulsions, multiple emulsions, suspensions, crèmes, foams, fibres or any other composite or hierarchically organized materials.

The presence of surfactants in the first continuous phase during droplet formation may result in unwanted diffusion of surfactant into the droplet. Such unwanted diffusion of surfactant can be avoided by the method of the invention if the droplet is modified by physical or chemical steps occurring between droplet formation and addition of surfactant. Thus, the method of the present invention allows to embed vital cells in a matrix even if the surfactants need to stabilize the cell containing droplets is toxic to the cells. According to the method of the invention, the cells and the corresponding matrix form the phase to be dispersed. After formation of the cell containing droplets but before the surfactant is added, the surface of the droplets is modified (e.g. sealed) to block any diffusion of the surfactant into the droplet. Finally, the surfactant is added and, while stabilizing the droplet, it can no longer diffuse into the droplet.

The method of the present invention allows the formation of droplets which can be sensitive to external stimuli. The sensitivity of such droplets, microparticles or hydrogels can be adapted to allow for a controlled release of active agents comprised in the droplets by external stimuli. Such external stimuli comprise but are not limited to temperature change, light, magnetic field, pH change or change in salt concentration.

FIGURES

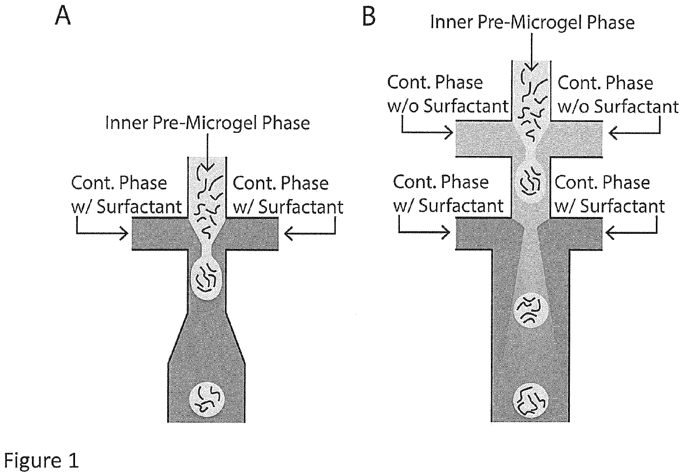

**Figure 1**: Schemes of microfluidic droplet-based emulsification of liquid phases by flow focusing. (A) Conventional approach of droplet formation in two-phase microfluidics. (B) Concept to enhance the rate of droplet production by separating the processes of droplet formation and droplet stabilization in a microfluidic device with two sequential cross-junction channels. In the first cross-junction, droplets are formed by flow focusing in the controlled dripping regime. To increase the rate of droplet formation, no surfactant is present in the flow-focusing continuous phase during this step. In the second cross-junction, surfactant is added to the continuous phase to prevent the freshly formed droplets from coalescing.

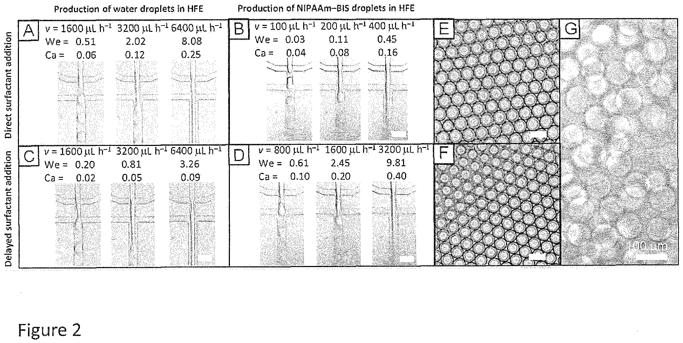

**Figure 2:** Dripping-to-jetting transitions in microfluidic emulsification comparing water/HFE oil and NIPAAm/HFE oil systems with either direct or delayed surfactant addition. (A, B): direct addition of surfactant in the first cross-junction. (C, D): delayed addition of surfactant in the second cross-junction. (A, C): emulsification of water in fluorinated oil HFE-7500 along with (A) direct or (C) delayed addition of the surfactant Krytox 157 FSL in the same oil (3.6% v/v). (B, D): emulsification of an aqueous monomer solution of 98 g $L^{-1}$ NIPAAm, 2 g $L^{-1}$ BIS, and 5 g $L^{-1}$ APS in fluorinated oil HFE-7500 along with (B) direct or (D) delayed addition of the surfactant Krytox 157 FSL in the same oil (3.6% v/v). (E), (F): monodisperse emulsion droplets obtained from the experiments in Panel (B) and (D). (G): monodisperse pNIPAAm microgel particles swollen in water as obtained from gelation of the droplets in Panel F. All scalebars denote 100 $\mu$m.

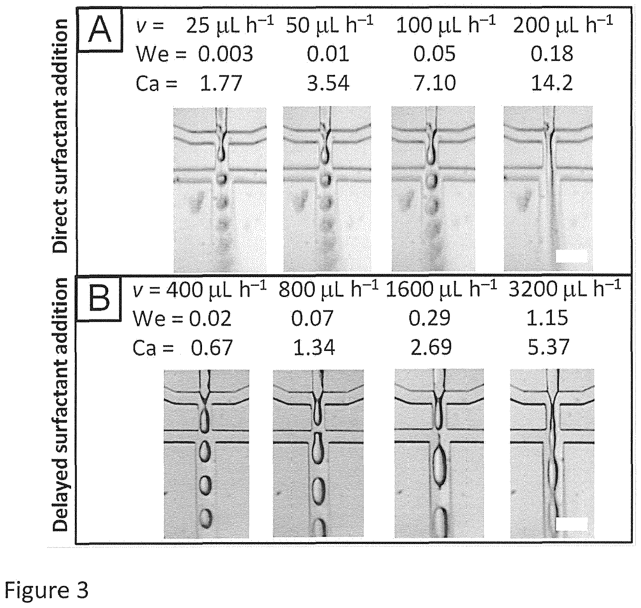

**Figure 3:** Dripping-to-jetting transitions in microfluidic emulsification of NIPAAm/paraffin oil with (A) direct addition of surfactant in the first cross-junction or with (B) delayed addition of surfactant in the second cross-junction. In both cases, the inner phase is an aqueous monomer solution of 98 g $L^{-1}$ NIPAAm, 2 g $L^{-1}$ BIS, and 5 g $L^{-1}$ APS, whereas the continuous phase is high viscous paraffin oil along with (A) direct or (B) delayed addition of surfactant ABIL EM 90 in the same oil (5% v/v). Both scalebars denote 100 $\mu$m.

In the following the invention will be exemplified by representative embodiments.

EXAMPLES

The conventional approach for droplet formation in droplet-based emulsification of liquid phases by use of flow focusing involves dispersion of an inner fluid (also called the phase to be dispersed) in a stabilizer-doped outer phase (also called the continuous phase) which should be performed in the dripping regime to form homogeneous droplet sizes (Figure 1A). The approach presented in here allows increasing the rate of droplet formation by decreasing the capillary and Weber number of the phase to be dispersed (also called inner phase) and the first continuous phase (also called outer phase), which is achieved by increasing their interfacial tension $\sigma$. With this strategy, microfluidic devices with a given channel size d can be operated at higher flow rates $v$ before the undesired dripping-to-jetting transition occurs. To achieve this, a first continuous phase without any surfactant is used, as illustrated in Figure 1 B. This mode of operation assures maximally possible interfacial tension with the phase to be dispersed. To prevent the droplets from coalescing, surfactant is added (preferably directly) after their formation in the microfluidic channel, as also illustrated in Figure 1B. With this approach, droplet formation can be temporally and spatially separated from droplet stabilization, allowing the first to occur at an increased rate while still ensuring the second.

As a model material, poly(N-isopropylacrylamide) [pNIPAAm] was selected due to its relevance for producing gels and microgels with a tunable volume-phase transition temperature close to the human body temperature, as well as due to the challenges arising from the microfluidic dispersion of aqueous solutions of its monomer, N-isopropylacrylamide (NIPAAm), in a continuous oil phase. This is because N-isopropylacrylamide is an amphiphilic molecule that has a strong interfacial activity, lowering the interfacial tension between the monomer fluid and the external oil. Whereas this amphiphilicity is desired in view of gaining a thermo-responsive polymer gel, it is disadvantageous during the microfluidic particle templating, because it requires microfluidic devices to be operated at low flows rates according to eq (1) and (2). Since the low interfacial activity of the NIPAAm-based monomer fluid is not sufficient to stabilize the resulting emulsion droplets from coalescence, further addition of surfactant to the outer oil phase is required. In the conventional microfluidic set-up, this lowers the maximal flow rates that still ensure controlled dripping regime even more.

Two different inner (phase to be dispersed) and outer (continuous phase) fluids were used in this assessment. One outer fluid was the fluorocarbon carbon oil HFE-7500 (3M) along with fluorinated surfactant Krytox 157 FSL (DuPont), which is an oil widely employed in biomicrofluidics. Another outer fluid was hydrocarbon paraffin oil along with a blockcopolymer surfactant, ABIL EM90 (Evonik Industries), which is a suitable fluid to emulsify inner phases with high viscosities. As inner phases, either pure water or a pre-microgel fluid were used. The pre-microgel phase for forming pNIPAAm microgels consisted of an aqueous solution of $N$-isopropylacrylamide (NIPAAm, 98 g L$^{-1}$) and N,N'-methylenebisacry-lamide (BIS, 2 g L$^{-1}$), along with a radical initiator, ammonium persulfate (APS, 5 g L$^{-1}$). This solution can be gelled after emulsification by free-radical crosslinking copolymerization of the monomers.

The formation of droplets was conducted in microfluidic devices with two sequential cross-junctions (Figure 1 B). In this example, the first junction had a uniform width and height of 40 $\mu$m, whereas the second cross-junction had a width of 80 $\mu$m along with a constant height of 40 $\mu$m. With this device, fluid droplets can be formed in the range of ~50 $\mu$m in diameter in the first cross-junction and a second fluid can be added in the second junction without risk of unwanted droplet splitting in this location. Using this setup, the devices were either used in the classical mode of operation with direct surfactant addition in the first, drop-forming cross-junction or alternatively, with delayed surfactant addition at the second junction. All microfluidic experiments were performed at equal ratios of flow rates of the inner and outer phases, respectively, $v = v_{\text{aq.phase}} = v_{\text{oil}} = v_{\text{oil+surfactant}}$. The flow rates were all gradually and equally increased to check for when the dripping-to-jetting transition occurs. To discuss this transition in view of the dimensionless capillary and Weber numbers, eq (1) and (2), the viscosities and interfacial tensions of the different fluids were determined by capillary viscometry and tensiometry, as compiled in Table 1 and 2.

*Table 1: Viscosities of the fluids used in this work, measured with an Ubbelohde viscometer at 25 °C.*

| Fluid | Kin. Viscosity (mm$^2$·s$^{-1}$) | Density (g·mL$^{-1}$) | Dyn. Viscosity (mPa·s) |
|---|---|---|---|
| Water | 0.908 | 0.996 | 0.904 |
| Monomer solution* | 1.29 | 1.399 | 1.80 |
| Fluorocarbon oil HFE-7500 | 0.771 | 1.62 | 1.25 |
| Fluorocarbon oil HFE-7500 w/ surfactant | 0.833 | 1.63 | 1.36 |
| Hydrocarbon Paraffin oil | 166 | 0.874 | 145 |
| Hydrocarbon Paraffin oil w/surfactant | 172 | 0.875 | 151 |

*) $N$-isopropylacrylamide (NIPAAm, 98 g L$^{-1}$), $N,N'$-methylenebisacrylamide (BIS, 2 g L$^{-1}$), ammonium persulfate (APS, 5 g L$^{-1}$)

*Table 2: Mutual interfacial tensions of the fluids used in this work, determined at 25 °C.*

| | HFE-7500 (mN m$^{-1}$) | HFE-7500 w/ surfactant (mN m$^{-1}$) | Paraffin oil (mN m$^{-1}$) | Paraffin oil w/ surfactant (mN m$^{-1}$) |
|---|---|---|---|---|
| Water | 15.1 | 6.09 | 16.0 | 1.66 |
| Monomer solution* | 1.76 | 0.60 | 15.0 | 0.37 |

*) $N$-isopropylacrylamide (NIPAAm, 98 g L$^{-1}$), $N,N'$-methylenebisacrylamide (BIS, 2 g L$^{-1}$), ammonium persulfate (APS, 5 g L$^{-1}$)

The emulsification of pure water in fluorocarbon oil HFE-7500 can be performed at high flow rates with classical direct addition of surfactant in the first microfluidic channel junction (Figure 2A). The maximum flow rate for controlled dripping was $v = 1600$ $\mu$L h$^{-1}$ before jetting was first observed at $v = 3200$ $\mu$L h$^{-1}$ and then dominated at $v = 6400$ $\mu$L h$^{-1}$. These flow rates correspond to capillary and Weber numbers of Ca$_{3200\ \mu\text{L/h}}$ = 0.12 and We$_{3200\ \mu\text{L/h}}$ = 2.02 according to eq (1) and (2), reflecting the established finding of the dripping-to-jetting transition to occur when either Ca or We or their sum is approximately equal to unity.

If the inner fluid is more complex and contains a NIPAAm-BIS monomer solution, however, stable and controlled dripping was operable only up to flow rates of $v = 100$ μL h$^{-1}$ with direct surfactant addition (Figure 2B). At higher flow rates, jetting first set in at $v = 200$ μL h$^{-1}$ and then dominated at $v = 400$ μL h$^{-1}$, corresponding to Ca$_{200\ \mu L/h}$ = 0.08 and We$_{200\ \mu L/h}$ = 0.11. The apparent reason for this marked difference to the previous experiment is the reduced interfacial tension in the emulsion of NIPAAm-BIS in HFE with surfactant. This was confirmed when determining σ$_{Water/HFE+surfactant}$ = 6.09 mN m$^{-1}$ in contrast to σ$_{NIPAAm-BIS/\ HFE+surfactant}$ = 0.6 mN m$^{-1}$, as compiled in Table 2. The about tenfold reduction of the interfacial tension in the latter emulsion is due to the amphiphilic nature of the NIPAAm monomer, which consists of both hydrophobic and hydrophilic sites.

To overcome the limitation of operating the NIPAAm-BIS emulsification in HFE with controlled dripping only at low flow-rates, we follow the concept of increasing the interfacial tension in the first, drop-forming microfluidic junction by delayed surfactant addition. With this approach, drop formation occurs in the first junction using plain HFE oil as continuous phase, whereas subsequent droplet stabilization is achieved by addition of HFE with surfactant in the second junction. In the simple water / HFE system, this approach had not yet a marked effect (Figure 2C), but in the NIPAAm-BIS / HFE system, the effect of delayed surfactant addition is notable (Figure 2D). Here, the onset of jetting did not occur before $v = 1600$ μL h$^{-1}$, corresponding to Ca$_{1600\ \mu L/h}$ = 0.20 and We$_{1600\ \mu L/h}$ = 2.45, and jetting did not dominate before $v = 3200$ μL h$^{-1}$. Compared to formally $v = 200$ μL h$^{-1}$ and $v = 400$ μL h$^{-1}$ with direct surfactant addition (Figure 2B), the delayed surfactant addition increases the volumic rate of pre-microgel emulsification in the controlled dripping regime by a factor of 8. This is because of an evident difference in interfacial tension of the NIPAAm-BIS / HFE and the NIPAAm-BIS /$_{HFE+surfactant}$ systems with σ$_{NIPAAm-BIS/HFE}$ = 1.76 mN m$^{-1}$ in contrast to σ$_{NIPAAm-BIS\ /\ HFE+surfactant}$ = 0.6 mN m$^{-1}$, as compiled in Table 2. With this increased droplet productivity, large amounts of nearly monodisperse pre-microgel emulsion droplets with minimal size variation (Figure 2F) can be prepared in short time.

Subsequent gelation of these droplets was achieved by monomer crosslinking in a copolymerization reaction within the droplets, triggered by droplet collection in a HFE bath that also contains 1 vol.% of $N,N,N',N'$-tetramethylethylenediamine (TEMED). The latter compound can penetrate into the pre-microgel droplets by diffusion and catalyzed decomposition of the ammonium persulfate radical initiator within them. Thereby copolymerization of the NIPAAm and BIS monomers and gelling the droplets occurred, yielding narrowly disperse microgel particles (Figure 2G).

As an alternative to fluorinated carbon oil, viscous hydrocarbon paraffin oil may be employed as the flow-focusing external phase in microfluidics. This type of oil is needed when inner pre-microgel phases are to be emulsified that have high viscosities, which can be the consequence of presence of polymeric or colloidal particulate additives in the pre-microgel phase that are anticipated to be encapsulated within the microgel. Here, paraffin oil was used along with a block-copolymer surfactant, ABIL EM90 (Evonik Industries). With these fluids, jetting of the NIPAAm phase occurred at $v = 200$ μL h$^{-1}$ when direct surfactant addition is performed in the first microfluidic channel junction (Figure 3A), corresponding to Ca$_{200\ \mu L/h}$ = 14.2 and We$_{200\ \mu L/h}$ = 0.18. However, when the alternative approach of delayed surfactant was applied, the dripping-to-jetting transition was delayed to $v = 1600$ μL h$^{-1}$, corresponding to Ca$_{1600\ UL/h}$ = 2.7 and We$_{1600\ \mu L/h}$ = 0.29, as shown in Figure 3B. Just like with the HFE oil, the present strategy of delayed surfactant addition allowed the volumic rate of controlled pre-microgel droplet formation to be increased by a factor of 8. In the present case, however, the flow rates that correspond to the dripping-to-jetting transition were lower than with fluorinated HFE oil, because the viscosities of paraffin oil and HFE oil are markedly different, as summarized in Table 2, thereby proportionally increasing the capillary number according to eq (1).

Separation of flow-focusing droplet formation and subsequent droplet stabilization by delayed addition of surfactant is a simple but efficient strategy to increase the rate of microfluidic-based fabrication of droplets such as for synthesis of microparticles. This strategy therefore provides a useful contribution to several fields of science and technology wherein such microparticles may be used, including those in the biomedical area. Further increase of productivity of these and other microparticles can be achieved by orthogonal strategies, for example, by fabrication of droplets that are larger than anticipated, which is possible at much higher flow rates than when small droplets are to be produced, and then splitting these droplets until a desired smaller size is achieved. In addition, parallel operation of many microfluidic channels can provide further increase of throughout. Due to their orthogonality, all these different approaches can be combined in a synergistic fashion to push droplet-based microfluidics for microparticle fabrication to an industrially relevant scale.

## Experimental

Microfluidic devices with a double cross-junction geometry as shown in Figure 2 and 3 were fabricated through soft lithography in PDMS by bonding a PDMS replica of a pre-designed array of channels onto a glass slide using oxygen plasma treatment. After the plasma treatment, the channels were coated by injecting a water repellent mixture of fluorinated compounds (Aquapel; PPG Industries, Pittsburgh, PA, U.S.A.) into the channels to render them hydrophobic and optimize their wettability for the formation of water-in-oil emulsions. To operate the devices, fluids were supplied through disposable plastic syringes (BD Plastikpak, 3 mL, Becton Dickinson Deutschland, Heidelberg, Germany) and polyethylene tubing (Intramedic Clay Adams PE Tubing "PE 20", Becton Dickinson, Sparks, MD, USA). The flow rates were adjusted with syringe pumps (AL 1010, WPI, Sarasota, FL, USA). To monitor the droplet formation, the microfluidic devices were operated on a digital high-speed microscope (VW 6000E with VH-Z100R lens and VW 100C camera, Keyence Deutschland GmbH, Neu-Isenburg, Germany). Images of the finally collected droplets were obtained on an optical microscope (DMI6000B, Leica, Wetzlar, Germany). The densities of the different fluids (p) were measured with a tensiometer (K 100, Kruess GmbH, Hamburg, Germany) using the density measurement set (DE0701, Kruess GmbH). Kinematic viscosities (v) were determined at 25 °C by Ubbelohde viscometer with Hagenbach correction (PVS1, S5 test stand, E200 thermostat, Koenigshofen, Germany) and application of capillaries of type IIa for paraffin oil and I for all other solutions. Dynamic viscosities ($\eta$) were calculated by $\eta = v \cdot \rho$. Interfacial tensions were measured by applying the K100 tensiometer with Wilhelmy-plate (PI01, Kruess GmbH). The used chemicals were fluorocarbon oil HFE-7500 (3M), fluorinated surfactant Krytox 157 FSL (DuPont), hydrocarbon paraffin oil (Roth), ABIL EM90 (Evonik Industries), *N,N,N',N'*-tetramethylethylenediamine (TEMED), *N*-isopropylacrylamide (NIPAAm), *N,N'*-methylenebisacrylamide (BIS) and ammonium persulfate (APS) (all latter by Sigma-Aldrich).

**Claims**

1. Method of forming droplets in a multi-phase system, wherein:

   - a phase to be dispersed is forced through an orifice or opening into a flow of a first continuous phase so that the phase to be dispersed forms droplets in the first continuous phase, wherein the phase to be dispersed is immiscible in the first continuous phase and wherein during droplet formation the first continuous phase lacks any surfactant; and wherein
   - subsequent to droplet formation, surfactant is added to the flow of the first continuous phase comprising the droplets of the phase to be dispersed.

2. The method of claim 1, wherein the droplets are formed by a flow focusing procedure.

3. The method of one of the preceding claims, wherein the phase to be dispersed is a liquid phase or a gas phase.

4. The method of one of the preceding claims, wherein the first continuous phase is a liquid phase or a gas phase.

5. The method of one of the preceding claims, wherein during droplet formation the phase to be dispersed lacks surfactant.

6. The method of one of the preceding claims, wherein the surfactant is added by feeding the flow of first continuous phase comprising the droplets of the phase to be dispersed with a second continuous phase comprising the surfactant.

7. The method of one of the preceding claims, wherein the surfactant is added to the flow of the first continuous phase comprising the droplets of the phase to be dispersed directly after formation of the droplets.

8. The method of one of the preceding claims, wherein prior to droplet formation the first continuous phase and/or the phase to be dispersed comprise compounds capable of increasing the interfacial tension between the phase to be dispersed and the first continuous phase.

9. The method of one of the preceding claims, wherein the flow of the first continuous phase is a laminar flow.

10. The method of one of the preceding claims, wherein the method is performed in a microfluidic system.

11. The method of claim 10, wherein the microfluidic system comprises or consists of:

    - a channel or capillary with an orifice or opening for focusing the flow of the phase to be dispersed into the flow of the first continuous phase;
    - a first cross-junction channel or inflow position for introducing the flow of the first continuous phase, the first cross-junction channel inflow position being in fluid contact with the outlet of the orifice or opening; and
    - a second cross-junction channel inflow position for introducing the surfactant, the second cross-junction channel inflow position being located downstream of the first cross-junction channel.

12. The method of one of the preceding claims, wherein the droplets are further manipulated before the surfactant is added.

13. The method of claim 12, wherein the further manipulation after formation of the droplets and before addition of the surfactant comprises precipitation, cross-linking, covalent binding, solidification, coagulation, vitrification, crystallization and/or phase transition processes at the inner or outer surface of the droplets.

14. The method of claim 12 or 13, wherein the droplets are fused, coated, loaded, further emulsified and/or surface modified prior to addition of the surfactant.

15. The method of one of the preceding claims, wherein the droplets are formed in a dripping-regime or in a jetting regime.

16. Use of the method of one of the preceding claims for the production of droplets, nanoparticles and/or microparticles, preferably of monodisperse droplets, nanoparticles and/or microparticles.

17. Use of the method of claim 16 for the production of multiple-layered and/or multiple-core microparticles.


**Patentansprüche**

1. Verfahren zum Ausbilden von Tropfen in einem mehrphasigen System, wobei:

- eine zu dispergierende Phase durch eine Mündung oder Öffnung in einen Strom einer ersten kontinuierlichen Phase gedrückt wird, sodass die zu dispergierende Phase in der ersten kontinuierlichen Phase Tropfen ausbildet, wobei die zu dispergierende Phase in der ersten kontinuierlichen Phase nicht mischbar ist und wobei die erste kontinuierliche Phase während der Tropfenausbildung keinerlei Tensid aufweist; und wobei
- im Anschluss an die Tropfenausbildung dem Strom der ersten kontinuierlichen Phase, welche die Tropfen der zu dispergierenden Phase umfasst, Tensid zugegeben wird.

2. Verfahren nach Anspruch 1, wobei die Tropfen durch einen Stromfokussierungsvorgang ausgebildet werden.

3. Verfahren nach einem der vorangehenden Ansprüche, wobei die zu dispergierende Phase eine Flüssigphase oder eine Gasphase ist.

4. Verfahren nach einem der vorangehenden Ansprüche, wobei die erste kontinuierliche Phase eine Flüssigphase oder eine Gasphase ist.

5. Verfahren nach einem der vorangehenden Ansprüche, wobei die zu dispergierende Phase während der Tropfenausbildung keinerlei Tensid aufweist.

6. Verfahren nach einem der vorangehenden Ansprüche, wobei das Tensid zugegeben wird, indem dem Strom der ersten kontinuierlichen Phase, welche die Tropfen der zu dispergierenden Phase umfasst, eine zweite kontinuierliche Phase, die das Tensid umfasst, zugeführt wird.

7. Verfahren nach einem der vorangehenden Ansprüche, wobei das Tensid dem Strom der ersten kontinuierlichen Phase, welche die Tropfen der zu dispergierenden Phase umfasst, unmittelbar nach der Ausbildung der Tropfen zugegeben wird.

8. Verfahren nach einem der vorangehenden Ansprüche, wobei vor der Tropfenausbildung die erste kontinuierliche Phase und/oder die zu dispergierende Phase Verbindungen umfassen, welche die Grenzflächenspannung zwischen der zu dispergierenden Phase und der ersten kontinuierlichen Phase erhöhen können.

9. Verfahren nach einem der vorangehenden Ansprüche, wobei der Strom der ersten kontinuierlichen Phase ein laminarer Strom ist.

10. Verfahren nach einem der vorangehenden Ansprüche, wobei das Verfahren in einem Mikrofluidiksystem ausgeführt wird.

11. Verfahren nach Anspruch 10, wobei das Mikrofluidiksystem Folgendes umfasst oder aus Folgendem besteht:

- einen bzw. einem Kanal oder eine bzw. einer Kapillare mit einer Mündung oder Öffnung zum Fokussieren des Stroms der zu dispergierenden Phase in den Strom der ersten kontinuierlichen Phase;
- einer ersten Querverbindungskanaleinströmstelle zum Einführen des Stroms der ersten kontinuierlichen Phase, wobei die erste Querverbindungskanaleinströmstelle in Flüssigkeitsverbindung mit dem Auslass der Mündung bzw. Öffnung steht; und
- eine zweite bzw. einer zweiten Querverbindungskanaleinstömstelle zum Einführen des Tensids, wobei sich die zweite Querverbindungskanaleinströmstelle stromabwärts des ersten Querverbindungskanals befindet.

12. Verfahren nach einem der vorangehenden Ansprüche, wobei die Tropfen weiter bearbeitet werden, bevor das Tensid zugegeben wird.

13. Verfahren nach Anspruch 12, wobei die weitere Bearbeitung nach der Tropfenausbildung und vor der Zugabe des Tensids Ausfällungs-, Vernetzungs-, kovalente Bindungs-, Verfestigungs-, Koagulations-, Vitrifizierungs-, Kristallisations- und/oder Phasenübergangsvorgänge an der inneren oder äußeren Oberfläche der Tropfen umfasst.

14. Verfahren nach Anspruch 12 oder 13, wobei die Tropfen vor der Zugabe des Tensids verschmolzen, beschichtet, geladen, weiter emulgiert und/oder oberflächenmodifiziert werden.

15. Verfahren nach einem der vorangehenden Ansprüche, wobei die Tropfen in einem Tropfenbildungsregime oder Strahlbildungsregime ausgebildet werden.

16. Anwendung des Verfahrens nach einem der vorangehenden Ansprüche zur Herstellung von Tropfen, Nanopartikeln und/oder Mikropartikeln, vorzugsweise von monodispersen Tropfen, Nanopartikeln und/oder Mikropartikeln.

17. Anwendung des Verfahrens nach Anspruch 16 zur Herstellung von Mehrschicht-und/oder Mehrkernmikropartikeln.

**Revendications**

1. Procédé de formation de gouttelettes dans un système à phases multiples, où :

   - une phase à disperser est refoulée par un orifice ou une ouverture vers le flux d'une première phase continue, de sorte que ladite phase à disperser forme des gouttelettes dans la première phase continue, la phase à disperser étant non miscible dans la première phase continue, et la première phase continue étant dépourvue de tout agent tensio-actif pendant la formation de gouttelettes; et où
   - consécutivement à la formation de gouttelettes, un agent tensio-actif est ajouté au flux de la première phase continue contenant les gouttelettes de la phase à disperser.

2. Procédé selon la revendication 1, où les gouttelettes sont formées au moyen d'un procédé de concentration de flux.

3. Procédé selon l'une des revendications précédentes, où la phase à disperser est une phase liquide ou une phase gazeuse.

4. Procédé selon l'une des revendications précédentes, où la première phase continue est une phase liquide ou une phase gazeuse.

5. Procédé selon l'une des revendications précédentes, où la phase à disperser est dépourvue d'agent tensio-actif pendant la formation de gouttelettes.

6. Procédé selon l'une des revendications précédentes, où l'agent tensio-actif est ajouté par apport d'une deuxième phase continue contenant l'agent tensio-actif au flux de première phase continue contenant les gouttelettes de la phase à disperser.

7. Procédé selon l'une des revendications précédentes, où l'agent tensio-actif est ajouté au flux de la première phase continue contenant les gouttelettes de la phase à disperser immédiatement après formation des gouttelettes.

8. Procédé selon l'une des revendications précédentes, où, préalablement à la formation de gouttelettes, la première phase continue et/ou la phase à disperser contiennent des composés aptes à accroître la tension interfaciale entre la phase à disperser et la première phase continue.

9. Procédé selon l'une des revendications précédentes, où le flux de la première phase continue est un flux laminaire.

10. Procédé selon l'une des revendications précédentes, où ledit procédé est exécuté dans un système microfluidique.

11. Procédé selon la revendication 10, où le système microfluidique comprend, ou consiste en :

- un canal ou un capillaire avec un orifice ou une ouverture permettant de concentrer le flux de la phase à disperser dans le flux de la première phase continue ;
- un premier emplacement d'admission à canal à jonction transversale pour introduire le flux de la première phase continue, ledit premier emplacement d'admission à canal à jonction transversale étant en contact fluidique avec la sortie de l'orifice ou de l'ouverture ; et
- un deuxième emplacement d'admission à canal à jonction transversale pour introduire l'agent tensio-actif, ledit deuxième emplacement d'admission à canal à jonction transversale étant situé en aval du premier canal à jonction transversale.

12. Procédé selon l'une des revendications précédentes, où les gouttelettes subissent une manipulation complémentaire préalablement à l'ajout de l'agent tensio-actif.

13. Procédé selon la revendication 12, où la manipulation complémentaire après formation des gouttelettes et avant ajout de l'agent tensio-actif comprend une précipitation, une réticulation, une liaison covalente, une solidification, une coagulation, une vitrification, une cristallisation et/ou des processus de transition de phase sur la surface intérieure ou sur la surface extérieure des gouttelettes.

14. Procédé selon la revendication 12 ou la revendication 13, où les gouttelettes sont fusionnées, revêtues, chargées, également émulsionnées et/ou modifiées en surface avant ajout de l'agent tensio-actif.

15. Procédé selon l'une des revendications précédentes, où les gouttelettes sont formées en mode d'égouttement ou en mode jet.

16. Utilisation du procédé selon l'une des revendications précédentes pour la production de gouttelettes, nanoparticules et/ou microparticules, préférentiellement de gouttelettes, nanoparticules et/ou microparticules monodispersées.

17. Utilisation du procédé selon la revendication 16 pour la production de microparticules multicouches et/ou multi-noyaux.

Figure 1

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9743048 A1
- WO 9930833 A1

**Non-patent literature cited in the description**

- **L. MARTIN-BANDERAS ; M. FLORES-MOSQUERA ; P. RIESCO-CHUECA ; A. RODRIGUEZ-GIL ; A. CEBOLLA ; S. CHÁVEZ ; A. M. GAÑÁN-CALVO.** *Small,* 2005, vol. 1, 688-692
- **A. S. UTADA ; A. FERNANDEY-NIEVES ; H. A. STONE ; D. A. WEITZ.** *Phys. Rev. Lett.,* 2007, vol. 99, 094502
- **L. MARTIN-BANDERAS et al.** *Small,* 2005, vol. 1, 688-692
- **T. FU et al.** *Chem. Engin. Science,* 2012, vol. 84, 207-217
- **S. TAKEUCHI et al.** *Adv. Mater.,* 2005, vol. 17, 1067-1072
- **L. MARTIN-BANDERAS ; M. FLORES-MOSQUERA ; P. RIESCO-CHUECA ; A. RODRIGUEZ-GIL ; Á. CEBOLLA ; S. CHÁVEZ ; A. M. GAÑÁN-CALVO.** *Small,* 2005, vol. 1, 688-692